# EUROPEAN PATENT APPLICATION

(11) **EP 2 762 336 A2**
(43) Date of publication of application: **06.08.2014**
(21) Application number: 12837129.1
(22) Date of filing: 17.08.2012
(51) Int. Cl.: B60G 11/14, B21D 26/02, F16F 1/12, F16F 1/04

(54) **VEHICLE-SUSPENSION SHRINKABLE-TUBE PRODUCING DEVICE AND A SHRINKABLE-TUBE PRODUCTION METHOD USING SAME**

(30) Priority: 30.09.2011 KR 20110099933
(71) Applicant: Hankyung Component Trading Co. Ltd., Seoul 153-702 (KR)
(72) Inventor: KIM, Choon-Su, Gunpo-si Gyeonggi-do 435-040 (KR)
(74) Representative: Algemeen Octrooi- en Merkenbureau B.V.
(86) International application number: PCT/KR2012/006575
(87) International publication number: WO 2013/048009

(57) **Abstract**

A vehicle suspension thermally shrinkable tube of the present invention is formed in a shape corresponding to a vehicle-suspension coil spring having a spiral shape and is formed so as to have a larger diameter than the diameter of the spring so as to allow the spring to be coupled by insertion; and is formed from a material the volume of which shrinks upon applying heat when the spring is coupled by insertion; and, after the spring has been slotted in and coupled, heat is applied and said tube is made to attach intimately to the spring.

## Description

### Technical Field

The present invention relates to a tube to be fitted onto and coupled to a surface of a spring for vehicle suspension, and more particularly, to an apparatus for manufacturing a heat shrinkable tube, which can produce a shrinkable tube having heat shrinkable properties and a spiral shape using molds, and a method of manufacturing a shrinkable tube using the same.

### Background Art

Generally, in a passenger vehicle, a coil spring having a spiral shape is used for vehicle suspension to absorb shock upon driving of the automobile, thereby protecting a chassis while enhancing driving comfort. Recently, since most passenger vehicles mount such a coil spring on the chassis, various studies have been actively made regarding this structure. Although a vehicle employing such a coil spring in a suspension system provides improved driving comfort as compared with a vehicle employing a plate spring, there is a structural problem.

The coil spring is fixed between a mount connected to an axle housing and a mount on a frame by upper and lower mounting plates to move elastically. When a vehicle travels on a rough road or passes a severely depressed place, the coil spring is subject to excessive extension and contraction causing frictional interference between adjacent springs.

When such frictional interference occurs frequently between adjacent springs, noise and abrasion can occur due to friction between the springs. Furthermore, when friction interference repeats for a long time, the spring can be damaged due to abrasion.

Recently, in order to solve such problems, the coil spring is coated with a synthetic rubber or a resin material. As a method of coating such a material, the coil spring is dipped in a resin or rubber solution to form a coating on a surface thereof, or the coil spring is fitted onto a coat prepared separately and then is bonded thereto by adhesives and the like.

However, this process has a problem of deterioration in productivity and can cause the coat to be partially separated from the coil spring when the adhesive is non-uniformly deposited.

### Disclosure

### Technical Problem

The present invention has been conceived to solve such problems in the art and an aspect of the present invention is to provide a heat shrinkable tube for vehicle suspension, which has an improved structure to ensure close contact between a coil spring and a coat while simplifying a manufacturing process, an apparatus for manufacturing a heat shrinkable tube, and a method of manufacturing a heat shrinkable tube using the same.

### Technical Solution

In accordance with one aspect of the present invention, a heat shrinkable tube has a shape corresponding to a shape of a coil spring for vehicle suspension having a spiral shape so as to be fitted onto and coupled to the spring, has a larger diameter than the diameter of the spring so as to be fitted onto the spring, is formed of a material which shrinks in volume upon application of heat, and is brought into close contact with the spring by applying heat thereto after being fitted onto and coupled to the spring.

In accordance with another aspect of the present invention, an apparatus for manufacturing a heat shrinkable tube includes: upper and lower molds separable from each other and each being provided at opposite ends thereof with openings, through which a tube formed of a heat shrinkable material passes; a spiral groove formed inside each of the upper and lower molds and having a shape corresponding to a shape of a spring for vehicle suspension when the upper and lower molds are coupled to each other; a core member having a cylindrical shape and disposed at a position corresponding to the groove, the core member having a tube seating groove formed on an outer circumferential surface thereof such that the tube is wound along the tube seating groove in a spiral shape corresponding to the shape of the spring; and end blocks coupled to opposite ends of the core member to close the openings formed at the opposite ends of the upper and lower molds, and having inlet and outlet hole through which the tube is inserted into and retracted from the upper and lower molds, wherein a spiral shrinkable tube capable being fitted onto the spring for vehicle suspension is manufactured by passing hot steam through inside of the tube wound around the core member to expand the tube.

Each of the upper and lower molds may have a protrusion or a protrusion insertion groove formed at a corresponding position of the upper or lower mold so as to guide an upper and lower mold-coupling position.

The upper and lower molds may include a securing unit securing the upper and lower molds at the upper and lower mold-coupling position, and the securing unit may include a hook and a hook locking portion complementarily provided to the upper and lower molds.

Each of the end blocks may have an arc slit formed around a virtual circle of a larger diameter than that of the core member and having an interior angle of 180° to 200° to allow the tube to be input and output therethrough.

The apparatus may further include: a guide pin passing through a block through-hole formed in each of the end blocks to be coupled to a mold pin hole formed in the upper mold such that the end blocks are coupled to the upper and lower molds at a correct position.

The end blocks and the core member may be coupled to each other by a fastening member.

In accordance with a further aspect of the present invention, a method of manufacturing a heat shrinkable tube for vehicle suspension includes: extruding a heat shrinkable material as a raw material of a heat shrinkable tube to form a tube; winding the extruded tube along a tube seating groove formed on a core member to form a spiral shape of the tube; disposing the core member wound with the tube so as to correspond to a spiral groove formed in upper and lower molds, and coupling the upper and lower molds to each other; securing opposite ends of the upper and lower molds with end blocks; passing hot steam through inside of the wound tube to expand the tube; and separating the upper and lower molds and the end block from each other, and cutting the produced spiral heat shrinkable tube.

### Advantageous Effects

As described above, according to the invention, a heat shrinkable tube can be easily fitted onto and coupled to a coil spring for vehicle suspension, and can be brought into close contact therewith by heating the coil spring after coupling, thereby improving productivity while simplifying a manufacturing process.

### Description of Drawings

- Fig. 1: is a perspective view of an apparatus for manufacturing a heat shrinkable tube for vehicle suspension according to one embodiment of the present invention.
- Fig. 2: is an exploded perspective view of the apparatus shown in Fig. 1.
- Figs. 3 and 4: are cross-sectional views showing a process of producing a heat shrinkable tube using the apparatus shown in Fig. 1.

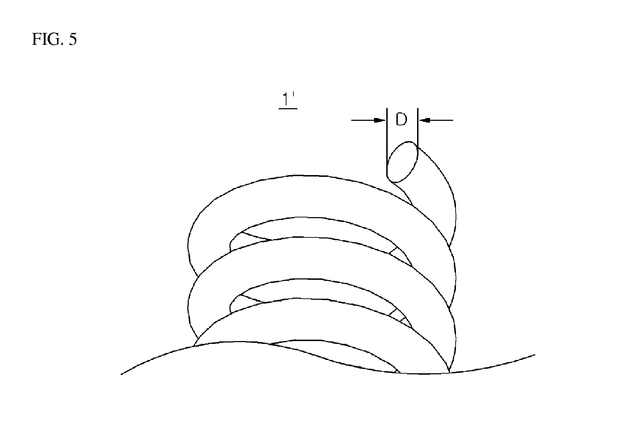

- Fig.5: is a perspective view of a heat shrinkable tube for vehicle suspension according to one embodiment of the present invention, which has a diameter (D).

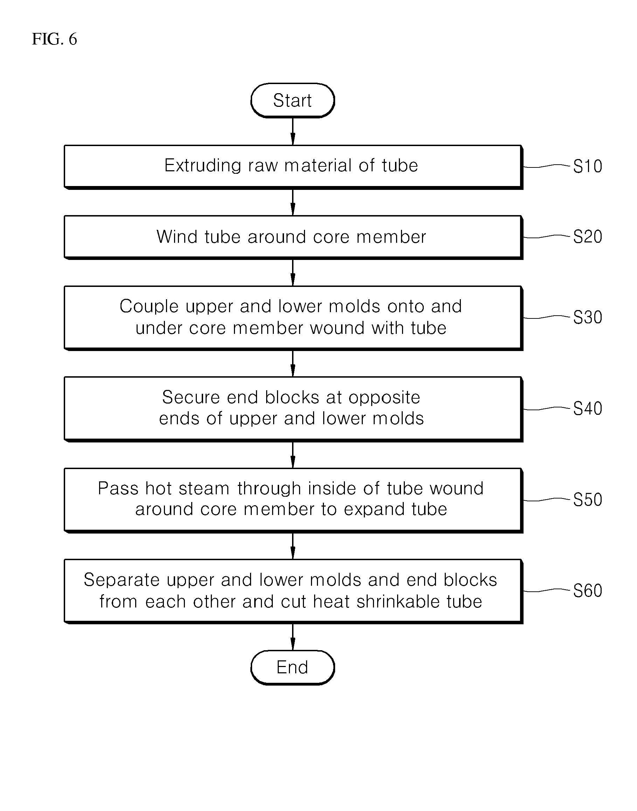

- Fig. 6: is a schematic flowchart of a method of manufacturing a heat shrinkable tube for vehicle suspension according to one embodiment of the present invention.

### Best Mode

Hereinafter, exemplary embodiments of the present invention will be described in detail with reference to the accompanying drawings.

A heat shrinkable tube according to the present invention is provided so as to be fitted onto and coupled to a coil spring for vehicle suspension having a spiral shape, has a larger diameter than the diameter of the spring so as to be fitted onto the spring, is formed of a material which shrinks in volume upon application of heat, and is brought into close contact with the spring by applying heat thereto after being fitted onto and coupled to the spring.

The heat shrinkable tube with this structure is difficult to produce by a general method. That is, since the material of the heat shrinkable tube shrinks upon application of heat, if a desired shape is not provided to the tube in a process of forming the tube, the tube can be bent or damaged upon shaping the tube into a spiral shape after formation of the tube, thereby making it difficult to form the shape of the tube corresponding to a shape of the coil spring for vehicle suspension.

Due to this problem, in the related art, as disclosed in Korea Utility Model Registration No. 1994-001897, a spring protection tube is incised at a middle portion thereof and a number of air holes are formed in the tube, which in turn is bonded to the spring via adhesives or the like. However, in this case, the adhesives can easily contaminate a workplace, and when the adhesive is not uniformly applied, the spring and the tube are not closely attached to each other, thereby causing easy damage to the tube.

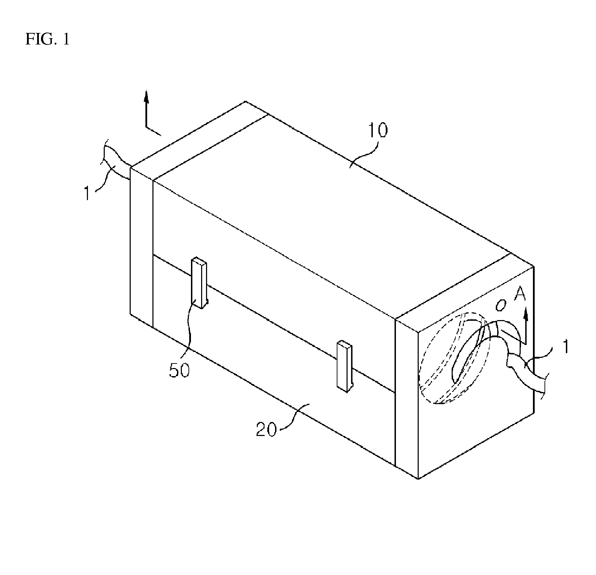

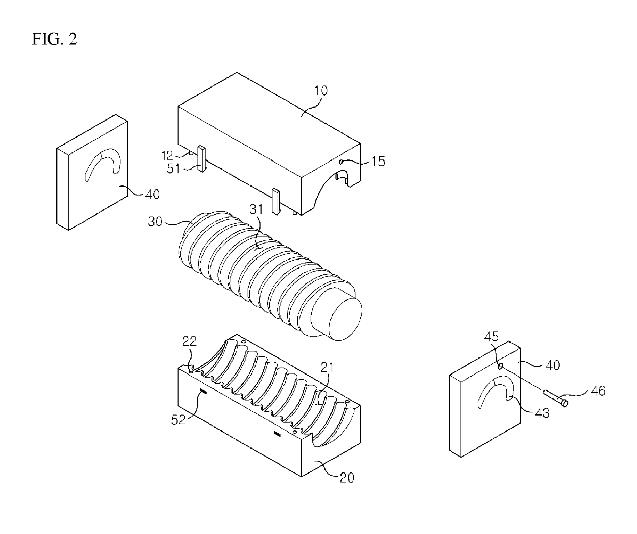

A heat shrinkable tube for vehicle suspension according to the present invention is formed into a spiral shape using molds which are separable from each other, as shown in Figs. 1 and 2.

An apparatus for manufacturing a heat shrinkable tube for vehicle suspension according to the present invention includes upper and lower molds 10, 20, grooves 11, 21, a core member 30, and end blocks 40.

The upper and lower molds 10, 20 are separably coupled to each other and are provided on inner surfaces thereof with grooves 11, 21 so as to have a shape corresponding to a shape of a coil spring for automobiles when coupled.

The upper and lower molds 10, 20 may be made by casting to withstand high temperature and high pressure, and surfaces of the upper and lower molds 10, 20 facing each other may be provided with a protrusion 12 and a protrusion receiving groove 22 corresponding to each other to guide a coupling position, respectively.

Since the heat shrinkable tube is formed in a spiral coil spring shape by the upper and lower molds 10, 20, dislocation of an engaging position of the upper and lower molds 10, 20 can cause a process error, such as warpage of the heat shrinkable tube 1 formed in the molds, and the like.

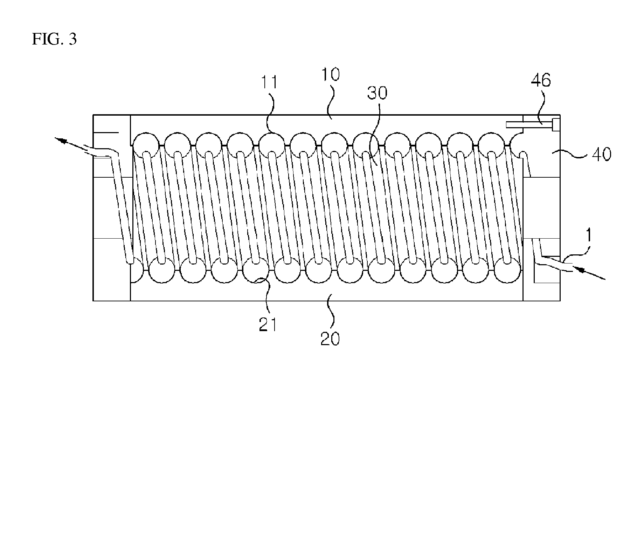

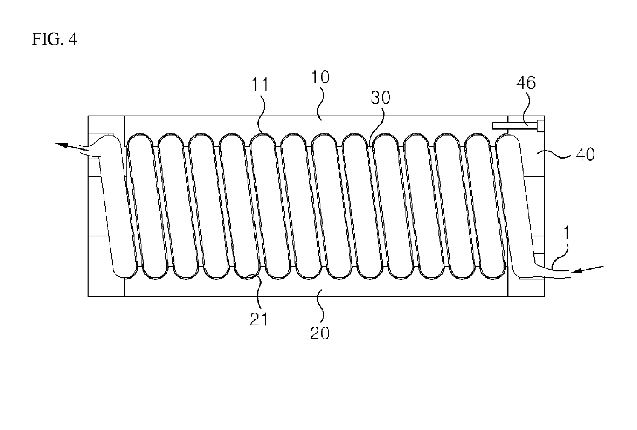

In order to provide an inner space of a coil spring shape inside the upper and lower molds 10, 20 upon coupling of the molds, the grooves 11 or 21 may be formed as semicircular grooves having a uniform pitch and a width corresponding to a diameter D of the heat shrinkable tube having a coil spring shape to be produced. To this end, as shown Figs. 3 and 4, the grooves 11 or 21 are separated from each other by the pitch.

The grooves 11 or 21 may have a slightly larger width than the diameter D of the tube in consideration of the thickness of the heat shrinkable tube 1. That is, if the width of the grooves is the same as the diameter D of the heat shrinkable tube to be produced, an error by the thickness of the heat shrinkable tube 1 occurs, so that a heat shrinkable tube having a smaller diameter than a designed diameter is obtained. The width of the grooves 11 or 21 may differ according to the diameter D of the tube 1 used. If the tube 1 has a large diameter, there is no significant influence by the thickness of the tube 1. However, if the tube 1 has a small thickness, there is great influence by the thickness of the tube 1. Therefore, the width of the groove is preferably set to be greater than the thickness of the tube given manufacturing tolerance thereof.

The upper and lower molds 10, 20 are maintained in a state of being coupled to each other by a securing unit 50. If the securing unit 50 is not provided, coupling of the upper and lower molds 10, 20 can be released during a process of ejecting steam at high temperature and high pressure into the tube as described below.

The core member 30 has a cylindrical shape and is disposed at a position corresponding to the grooves 11, 21. The core member 30 has tube seating grooves 31 formed on an outer circumferential surface thereof such that the tube 1 is wound around the tube seating grooves 31 in a spiral shape corresponding to the shape of the spring.

The tube seating grooves 31 have a diameter corresponding to that of the grooves 11, 21, and a cylindrical space formed by coupling the grooves 11, 21 and the tube seating grooves 31 becomes an outer shape of the heat shrinkable tube, whereby a heat shrinkable tube having a shape corresponding to the coil spring having a spiral shape can be produced.

As in the grooves 11 or 21, the tube seating grooves 31 are separated from each other at constant intervals, which are the same as those of the grooves 11 or 21.

As described above, the tube 1 formed of a heat shrinkable material is wound around the tube seating grooves 31. Herein, the tube 1 has a smaller diameter than the heat shrinkable tube 1 to be fitted onto and coupled to the coil spring. The tube 1 wound around the tube seating grooves 31 expands during a process of passing hot steam through inside of the tube, after the upper and lower molds 10, 20, and end blocks 40 described below are completely secured to one another in a sealing manner, such that the heat shrinkable tube 1 has a desired diameter.

The upper and lower molds 10, 20 include a securing unit 50, which secures the upper and lower molds 10, 20 at upper and lower mold-coupling positions. The securing unit 50 may include a hook 51 and a hook locking portion 52 complementarily provided to the upper and lower molds 10, 20, respectively.

Although not shown in the drawings, the securing unit 50 may be realized in various structures as well as the aforementioned structure. For example, an electromagnet may be used to couple the upper and lower molds 10, 20 to each other. In this case, the upper and lower molds are prevented from being separated from each other by applying current thereto. In this way, any structure may be used so long as the structure can prevent separation of the upper and lower molds 10, 20 from each other.

The end blocks 40 are coupled to opposite ends of the core member 30 to close the openings formed at the opposite ends of the upper and lower molds, and have inlet and outlet hole through which the tube 1 is input into and output from the upper and lower molds.

The end blocks 40 secure the core member 30 at a center of the upper and lower molds 10, 20. With this structure, the core member 30 is secured and coupled at the center of the molds, and is fastened to each of the upper and lower molds 10, 20 at a coupling position of the upper and lower molds 10, 20.

The end block 40 may have an arc slit 43 formed around a virtual circle having a larger diameter than that of the core member 30 and having an interior angle of 180° to 200° to allow the tube to be input and output therethrough.

In order to allow the core member 30 secured to the end blocks 40 to be placed at a constant position, a block through-hole 45 may be formed through the end block 40, a mold pin hole 15 having a size corresponding to the block through-hole 45 is provided to a position of the upper mold 10 and/or the lower mold 20 facing the block through-hole 45, and a guide pin 46 is further provided to the end block 40 to pass through the block through-hole 45 and to be coupled to the mold pin hole 15.

Hereinafter, a method of manufacturing a heat shrinkable tube using the apparatus as described above will be described in detail.

First, a tube is produced by extruding a heat shrinkable material as a raw material of a heat shrinkable tube (S10).

The extruded tube 1 is wound along the tube seating grooves 31 formed on the core member 30 to have a spiral shape corresponding to a shape of a coil spring for vehicle suspension (S20).

When the tube is wound on the core member 30, the core member 30 is disposed so as to correspond to a spiral groove formed in the upper and lower molds 10, 20, and the upper and lower molds are coupled and secured to each other using the securing unit 50 (S30).

The end blocks 40 coupled to opposite ends of the core member 30 are secured and coupled to at least one or both of the upper and lower molds 10, 20 using a fastening member, such as a bolt (S40).

Hot steam is passed through inside of the tube 1 to expand the tube. Then, while being expanded by the hot steam, the exterior of the tube 1 is brought into close contact with the grooves 11, 21 of the upper and lower molds 10, 20 and the tube seating grooves 21 of the core member 30, thereby completing the shape of the tube 1 (S50).

When the shape of the tube 1 is completed, the upper and lower molds 10, 20 and the end blocks are separated from each other, and the produced spiral heat shrinkable tube 1 for vehicle suspension is cut to a certain length (S60).

### Industrial Applicability

The present invention provides a heat shrinkable tube, which can be easily fitted onto and coupled to a coil spring for vehicle suspension and can be brought into close contact therewith by heating the coil spring after coupling, thereby improving productivity while simplifying a manufacturing process.

## Claims

1. An apparatus for manufacturing a heat shrinkable tube, comprising:
upper and lower molds separable from each other and each being provided at opposite ends thereof with openings, through which a tube formed of a heat shrinkable material passes;
a spiral groove formed inside each of the upper and lower molds and having a shape corresponding to a shape of a spring for vehicle suspension when the upper and lower molds are coupled to each other;
a core member having a cylindrical shape and disposed at a position corresponding to the groove, the core member having a tube seating groove formed on an outer circumferential surface thereof such that the tube is wound along the tube seating groove in a spiral shape corresponding to the shape of the spring; and
end blocks coupled to opposite ends of the core member to close the openings formed at the opposite ends of the upper and lower molds, and having inlet and outlet hole through which the tube is inserted into and retracted from the upper and lower molds,
wherein a spiral shrinkable tube capable being fitted onto the spring for vehicle suspension is manufactured by passing hot steam through inside of the tube wound around the core member to expand the tube.

2. The apparatus according to claim 1, wherein each of the upper and lower molds has a protrusion or a protrusion insertion groove formed at a corresponding position of the upper or lower mold so as to guide an upper and lower mold-coupling position.

3. The apparatus according to claim 2, wherein the upper and lower molds comprise a securing unit securing the upper and lower molds at the upper and lower mold-coupling position, and the securing unit comprises a hook and a hook locking portion complementarily provided to the upper and lower molds.

4. The apparatus according to claim 1, wherein each of the end blocks has an arc slit formed around a virtual circle of a larger diameter than that of the core member and having an interior angle of 180° to 200° to allow the tube to be inserted and retracted therethrough.

5. The apparatus according to claim 4, further comprising: a guide pin passing through a block through-hole formed in each of the end blocks to be coupled to a mold pin hole formed in the upper mold such that the end blocks are coupled to the upper and lower molds at a correct position.

6. The apparatus according to claim 5, wherein the end blocks and the core member are coupled to each other by a fastening member.

7. A method of manufacturing a heat shrinkable tube for vehicle suspension, comprising:
extruding a heat shrinkable material as a raw material of a heat shrinkable tube to form a tube;
winding the extruded tube along a tube seating groove formed on a core member to form a spiral shape of the tube;
disposing the core member wound with the tube so as to correspond to a spiral groove formed in upper and lower molds, and coupling the upper and lower molds to each other;
securing opposite ends of the upper and lower molds with end blocks;
passing hot steam through inside of the wound tube to expand the tube; and
separating the upper and lower molds and the end block from each other, and cutting the produced spiral heat shrinkable tube.
